# EUROPEAN PATENT APPLICATION

(11) **EP 4 663 391 A1**
(43) Date of publication of application: **17.12.2025**
(21) Application number: 24181113.2
(22) Date of filing: 10.06.2024
(51) Int. Cl.: B29C 70/24, B29C 70/48

(54) **METHOD OF MAKING A COMPOSITE PANEL FOR AN AIRCRAFT, COMPOSITE PANEL, AND AIRCRAFT**

(71) Applicant: Airbus Operations GmbH, 21129 Hamburg (DE)
(72) Inventor: Friedel, Andreas, 21129 Hamburg (DE); Benthien, Hermann, 21129 Hamburg (DE)
(74) Representative: KASTEL Patentanwälte PartG mbB

(57) **Abstract**

In a method of making a composite panel (14) for an aircraft, in particular formed as a belly fairing, a plurality of layers (16, 17, 18) are arranged on top of each other to form a layer arrangement (20), wherein each layer (16, 17, 18) is formed by a number of mats (22, 23) made of a textile, which are laterally adjacent to each other and overlap each other to form one or more overlapping areas (26) in each layer (16, 17, 18) of the layer arrangement (20). The mats (22, 23) are impregnated with a matrix material. Sewing is performed across all layers (16, 17, 18) of the layer arrangement (20) at least at an edge (28) thereof, and/or in the overlapping areas (26) of at least one of the outer layers (16, 18) of the layer arrangement (20). One or more seams (32) are created. The matrix material is consolidated after sewing the layer arrangement (20).

## Description

The invention relates to a method of making a composite panel for an aircraft. Further, the invention relates to a composite panel for an aircraft, and to an aircraft. In particular, the composite panel is sustainable under fire conditions. Preferably, the composite panel is a belly fairing element or a component thereof.

Large composite panels, like e.g. a belly fairing of an aircraft, are typically made of a textile or fabric tape which has a limited width, which may be for example 30 cm. Therefore, a splice is needed when the component is large and a number of fabric parts or tapes are arranged side by side. A number of such layers is arranged on top of each other. The fabric or textile is impregnated with a resin and hardened.

However, under fire conditions, the resin may become fluid and thus the top layer may fall down. To avoid this, the so called splice problem is solved today by continuously riveted extruded T profiles, which are holding the fabric tapes in place.

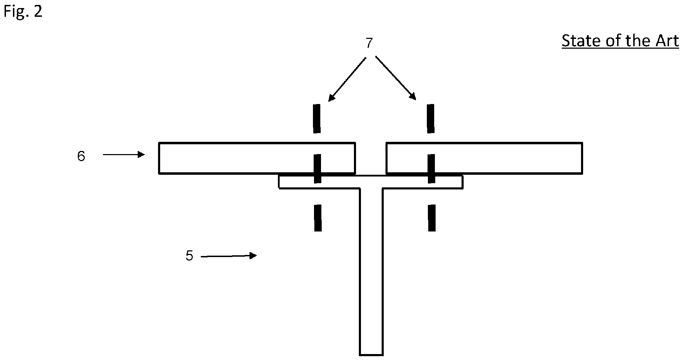

**Fig. 2** shows an example according to the state of the art, in which a T profile 5 holds fabric tapes 6 in place by rivets or bolts 7.

It is the object of the invention to create a method of making a composite panel, which provides an improved fire resistance. In particular, a belly fairing shall be provided, which has an increased fire resistance.

According to a first aspect, the invention provides a method of making a composite panel for an aircraft, in particular a belly fairing element, comprising the steps: arranging a plurality of layers on top of each other to form a layer arrangement, wherein each layer is formed by a number of mats made of a textile or fabric, which are laterally adjacent to each other and overlap each other to form one or more overlapping areas in each layer of the layer arrangement; impregnating the mats with a matrix material; sewing across all layers of the layer arrangement at least at an edge thereof, and/or in the overlapping areas of at least one of the outer layers of the layer arrangement, to create one or more seams; and consolidating the matrix material after sewing the layer arrangement.

Preferably, the sewing is performed when the textile or fabric is dry or wet.

Preferably, the seams penetrate the layers in a direction perpendicular to the surfaces of the layers.

Preferably, the seams form a zig-zag pattern.

Preferably, the thread fibre used for the seams is made from a material with a high fire resistance.

Preferably, the thread fibre comprises aramid fibres.

Preferably, a first part of the mats or layers are made of a first material and a second part of the mats or layers are made of a second material, which is different from the first material.

Preferably, the first material comprises carbon fibres and the second material comprises glass fibres.

Preferably, the second material is non-corrosive when in contact with a metal to provide a separation between the first material and a metallic part of an aircraft to which the composite panel will be fixed.

According to a second aspect, the invention provides a composite panel for an aircraft, in particular a belly fairing element, comprising a plurality of layers arranged on top of each other to form a layer arrangement, wherein each layer is formed by a number of mats made of a textile or fabric, which are laterally adjacent to each other and overlap each other to form one or more overlapping areas in each layer of the layer arrangement; wherein the mats are impregnated with a matrix material; and the layers of the layer arrangement are sewn together at least at an edge thereof, and/or in the overlapping areas of at least one of the outer layers of the layer arrangement, to create one or more seams; and the matrix material is consolidated.

Preferably, a first part of the mats or layers are made of a first material and a second part of the mats or layers are made of a second material, which is different from the first material.

Preferably, the first material comprises carbon fibres and the second material comprises glass fibres.

Preferably, the second material is non-corrosive when in contact with a metal to provide a separation between the first material and a metallic part of an aircraft, wherein the composite panel is configured to be fixed to that metallic part of the aircraft.

Preferably, the composite panel is made by the method according to the first aspect of the invention.

According to a third aspect, the invention provides an aircraft which comprises a composite panel according to the second aspect of the invention.

The composite panel is a component of an aircraft, e.g. a fairing, in particular a belly fairing.

In particular, to hinder the delamination at the edges of the composite panel or component in case of fire, the seam or edge of the composite is sewed across all layers.

This can also be done with spliced fabrics or textiles. The seam is e.g. placed in the splice area along the splice to prevent the splice from disassembling when the resin is being molten in case of fire. The sewing is being done before consolidation, either when the textile is dry or wet.

By the invention, the fire resistance is improved. The layer delamination is hindered. In particular, hindering of delamination is due to the impact on the edges.

Due to the fact that the layer edges are not peeling off completely, trapped resin inside is also still able to perform mechanical bonding to a limited extend, thus further increasing the fire resistance.

In the following, exemplary embodiments of the invention showing further advantages and characteristics are described in detail with reference to the figures, in which:
- **Fig. 1**: shows a partial schematic perspective view of an aircraft equipped with a belly fairing according to a preferred embodiment of the invention;
- **Fig. 2**: shows a T profile holding fabric tapes in place by rivets or bolts according to the state of the art;
- **Fig. 3**: shows a partial schematic perspective view of a composite panel during manufacturing according to a preferred embodiment of the invention; and
- **Fig. 4**: shows the composite panel depicted in Fig. 3 as a top view.

In the figures, similar or identical elements and features are designated by the same reference numbers.

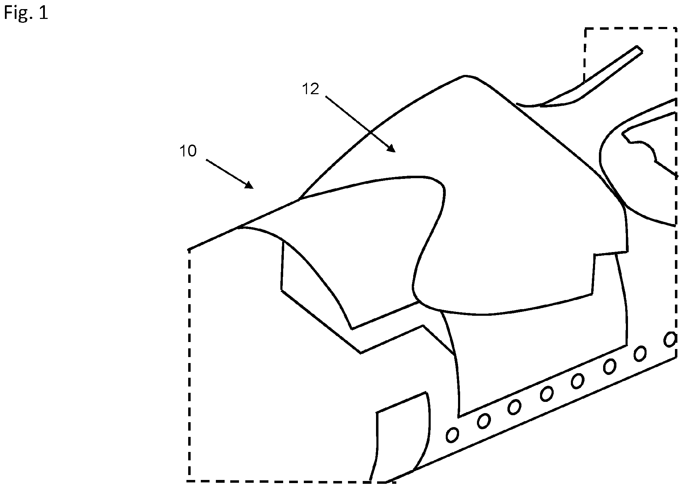

**Fig. 1** shows an aircraft 10 which comprises a belly fairing 12 at its bottom according to a preferred embodiment of the invention. The belly fairing 12 offers an increased fire protection.

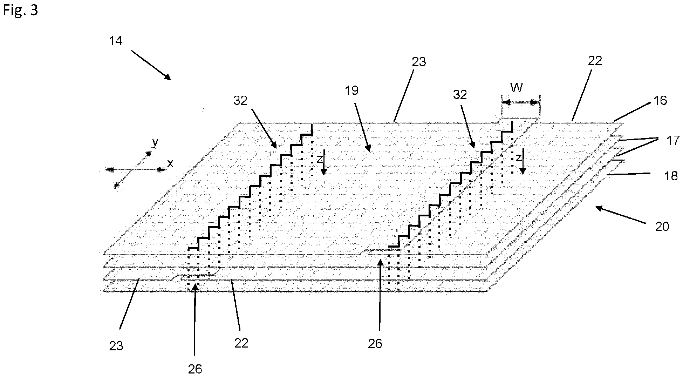

The belly fairing 12 comprises or is made of a composite panel 14 which is depicted in **Fig. 3** during manufacturing according a preferred example.

It is noted that the invention is not limited to manufacturing a belly fairing or belly fairing element. In general, various types of composite components or panels for an aircraft can be made, in particular where a high fire resistance is required.

Particularly, relatively large components or panels can be provided by the method described herein.

The composite panel 14 for an aircraft comprises a plurality of layers 16, 17, 18 arranged on top of each other to form a layer arrangement 20. Each layer 16, 17, 18 is formed by a number of mats 22, 23 made of a fabric or textile, which are laterally adjacent to each other. The adjacent mats 22, 23 overlap each other to form one or more overlapping areas 26 in each layer 16, 17, 18 of the layer arrangement 20.

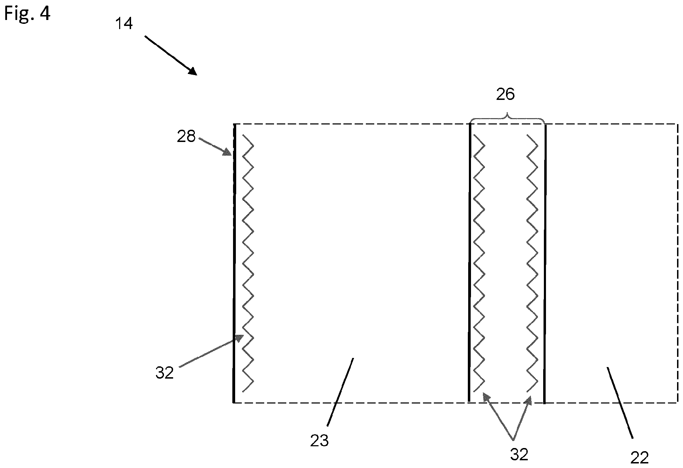

As depicted in **Figs. 3** **and** **4****,** all layers 16, 17, 18 of the layer arrangement 20 are sewn together at least at an edge 28 thereof and/or in the overlapping areas 26 of at least one of the outer layers 16, 18 of the layer arrangement 20. In this way, one or more seams 32 are created.

The overlapping areas have e.g. a width W of 12-25 mm.

The mats 22, 23 are impregnated with a matrix material. It is possible to impregnate the layers 16, 17, 18 or mats 22, 23 before or after sewing them together.

After sewing, the matrix material with which the layers 16, 17, 18 or mats 22, 23 are impregnated is consolidated.

A first part of the mats 22, 23 or layers 16 may be made of a first material and a second part of the mats 22, 23 or layers 16 may be made of a second material, which is different from the first material. For example, the first material may comprise carbon fibres and the second material may comprise glass fibres. That means, that for example the mats 22 in the figures are made of carbon or carbon fibres and the mats 23 in the figures are made of glass or glass fibres.

Similarly, the layers 16, 17, 18 arranged on top of each other may be made of different materials. For example, the top layer 16 and/or the bottom layer 18 in the figures may be made of glass fibres, whereas one or more of the layers 17 arranged between them may be made of carbon fibres.

In this way, a material which is non-corrosive when in contact with aluminium may form a separation layer of the composite panel when it is fixed to an aluminium or metallic part of the aircraft structure.

For example, mats 22 are made of a carbon fabric or carbon fibres and are separated from the aluminium structure of the aircraft structure by mats 23 which are made glass fibres. The glass fibres or fabric does not lead to electrochemical corrosion when in contact with metal parts, while the carbon fibres, which would lead to corrosion when in contact with metal, are separated from the metal, but provide a maximum of strength and protection capabilities within the composite part or panel 14.

In the following, an example of a method of making a composite panel for an aircraft is described with reference to **Figs. 3** **and** **4****.**

In a first step, a plurality of layers 16, 17, 18 are arranged on top of each other to form layer arrangement 20. The layers 16, 17, 18 are formed by a number of mats 22, 23 made of a textile, which are laterally adjacent to each other and overlap each other. In this way, one or more overlapping areas 26 are formed in each layer 16, 17, 18 of the layer arrangement 20. The overlapping areas 26 form splices.

Thereafter, sewing across all layers 16, 17, 18 is performed. Thus, one or more seams 32 are created in the layer arrangement 20. Sewing is performed in particular at one or more edges 28 of the layer arrangement 20, and preferably also in the overlapping areas 26.

In this way, the edges 28 are particularly protected against peeling off the layers 16, 17, 18 in case of fire. Further, the layers are fixedly connected in the overlapping areas also in case of fire, so that the mats 22, 23 cannot separate from each other.

The seams 32 penetrate the layers 16, 17, 18 in a direction z perpendicular to the surfaces 19 of the layers 16, 17, 18.

In particular, the seams 32 form a zig-zag pattern in the plane of the layers 16, 17, 18.

In the embodiment shown here, the fibres of each layer 16, 17, 18 are oriented in a direction which is parallel to the plane of the layers 16, 17, 18. Preferably, as shown in Fig. 3, the fibres are oriented in a first direction x and in a second direction y.

The fibre directions x, y are oriented perpendicular to each other in the plane of the respective layer 16, 17, 18.

Before or after sewing, the mats 22, 23 are impregnated with a matrix material formed by a resin. That means, the sewing is performed when the textile or fabric is dry or wet.

As described above, a first part of the mats 22, 23 or layers 16, 17, 18 is e.g. made of a first material and a second part of the mats or layers is made of a second material, which is different from the first material. The first material may e.g. comprise carbon fibres and the second material may e.g. comprise glass fibres.

More generally, the second material is preferably non-corrosive when in contact with a metal to provide a separation between the first material and a metallic part of an aircraft to which the composite panel 14 will be fixed.

In other words, when the layer arrangement 20 is connected or fixed to a metallic structure or part of the aircraft, in particular to an aluminium part or structure, only the layer or layers made of electrochemically non-corrosive material are in contact with that structure, while layers made of another material having other advantageous properties but would cause corrosion are separated from the structure.

In specific embodiments, a honeycomb structure is additionally arranged between in the composite panel 14. In this case the seams 32 make sure that the layers 16, 17, 18 and the honeycomb structure cannot move relative to each other during manufacturing or in case of fire. The seams 32 may also penetrate the honeycomb structure or a part thereof.

According to specific requirements, depending of the application, a preferably thin metallic layer, in particular a thin aluminum layer, may be provided as an additional layer of the layer arrangement 20.

The invention provides a safe and secure stabilization and fixation of fabric layers and optional additional layers or honeycomb structures in case of fire and during manufacturing.

In particular, electrochemical corrosion can be avoided by selecting and combining particular fabric or fibre materials, and an improved fire protection is achieved.

In particular, aircraft components providing fire protection are created by the method described above. Preferred components created according to the invention are fairings, in particular belly fairings of an aircraft.

### List of reference numbers:

- 5: T profile
- 6: fabric tapes
- 7: bolts 7
- 10: aircraft
- 12: belly fairing
- 14: composite panel
- 16, 17, 18: layers
- 19: layer surface
- 20: arrangement of layers
- 22,23: mats
- 26: overlapping areas
- 28: edge
- 32: seam

- W: width
- x, y: directions of fibres
- z: direction of penetration

## Claims

1. Method of making a composite panel for an aircraft, in particular a belly fairing element, comprising the steps:
- arranging a plurality of layers (16, 17, 18) on top of each other to form a layer arrangement (20), wherein each layer (16, 17, 18) is formed by a number of mats (22, 23) made of a textile, which are laterally adjacent to each other and overlap each other to form one or more overlapping areas (26) in each layer (16, 17, 18) of the layer arrangement (20);
- impregnating the mats (22, 23) with a matrix material;
- sewing across all layers (16, 17, 18) of the layer arrangement (20) at least at an edge (28) thereof and/or in the overlapping areas (26) of at least one of the outer layers (16, 18) of the layer arrangement (20), to create one or more seams (32); and
- consolidating the matrix material after sewing the layer arrangement (20).

2. Method according to claim 1, **characterized in that** the sewing is performed when the textile is dry or wet.

3. Method according to claim 1 or 2, **characterized in that** the seams (32) penetrate the layers (16, 17, 18) in a direction (z) perpendicular to the surfaces (19) of the layers (16, 17, 18).

4. Method according to one of the preceding claims, **characterized in that** the seams (32) form a zig-zag pattern.

5. Method according to one of the preceding claims, **characterized in that** the seams (32) comprises a thread fiber material, which is different from the material of the mats (22, 23) or layers (16, 17, 18).

6. Method according to claim 5, **characterized in that** the seams (32) comprises aramid fibres.

7. Method according to one of the preceding claims, **characterized in that** a first part of the mats (22, 23) or layers (16, 17, 18) are made of a first material and a second part of the mats (22, 23) or layers (16, 17, 18) are made of a second material, which is different from the first material.

8. Method according to claim 7, **characterized in that** the first material comprises carbon fibres and the second material comprises glass fibres.

9. Method according to one of the preceding claims, characterized that that the second material is non-corrosive when in contact with a metal to provide a separation between the first material and a metallic part of an aircraft (10) to which the composite panel (14) will be fixed.

10. Composite panel for an aircraft, in particular formed as a belly fairing element, comprising
a plurality of layers (16, 17, 18) arranged on top of each other to form a layer arrangement (20), wherein
each layer (16, 17, 18) is formed by a number of mats (22, 23) made of a textile, which are laterally adjacent to each other and overlap each other to form one or more overlapping areas (26) in each layer (16, 17, 18) of the layer arrangement (20);
wherein the mats (22, 23) are impregnated with a matrix material; and
the layers (16, 17, 18) of the layer arrangement (20) are sewn together at least at an edge (32) thereof, and/or in the overlapping areas (26) of at least one of the outer layers (16, 18) of the layer arrangement (20), to create one or more seams (32); and
the matrix material is consolidated.

11. Composite panel according to claim 10, **characterized in that** a first part of the mats or layers (16, 17, 18) are made of a first material and a second part of the mats or layers (16, 17, 18) are made of a second material, which is different from the first material.

12. Composite panel according to claim 11, **characterized in that** the first material comprises carbon fibres and the second material comprises glass fibres.

13. Composite panel according to claim 11 or 12, **characterized in that** the second material is non-corrosive when in contact with a metal to provide a separation between the first material and a metallic part of an aircraft (10), wherein the composite panel (14) is configured to be fixed to that metallic part of the aircraft (10).

14. Composite panel according to one of claims 10 to 13, **characterized in that** it is made by the method according to one of claims 1 to 9.

15. Aircraft, **characterized in that** it comprises a composite panel (14) according to one of claims 10 to 14.
